# EUROPEAN PATENT APPLICATION

(11) **EP 2 093 705 A1**
(43) Date of publication of application: **26.08.2009**
(21) Application number: 08290162.0
(22) Date of filing: 20.02.2008
(51) Int. Cl.: G06Q 10/00

(54) **Coaching application for a user of a mobile terminal**

(71) Applicant: Alcatel Lucent, 75008 Paris (FR)
(72) Inventor: Daurensan, Véronique, 92160 Antony (FR); Boidart, Bertrand, 78280 Guyancourt (FR)
(74) Representative: Sayettat, Julien Christian

(57) **Abstract**

Coaching application (2) for a user of a mobile terminal (1) and mobile network architecture integrating such application (2), said application (2) comprising computing means to establish computed data by analysing at least utilisation data (3) of said mobile terminal (1), said application (2) further comprising generating means of a coaching message (7) with such computed data.

## Description

The invention relates to a coaching application for a user of a mobile terminal and a mobile network architecture integrating such application.

Nowadays, people wish to benefit from coaching services in order to have, notably:
- a synthesis of their day,
- personal coaching as regards one or several domains such as the managing of their relationship with their contacts, the analysis of the repartition of their activities and the evolution of that repartition,...
- news as regards their activities, such as publicity or updated information.

People wishing to receive such coaching services must search themselves for the information and proceed with an analysis of that information, if needed. Coaching services are not automatically delivered to them in their everyday life.

In parallel, people generally carry a mobile terminal, such as a mobile phone, with them in their everyday activities. Such mobile terminals are equipped with applications such as agenda, directory, additional databases and often geographical localisation means which enable to have real-time information concerning the activities of their user.

Those same users who wish to benefit from coaching services have an interest in benefiting from such services via their mobile terminal. Indeed, it would enable them to automatically receive, without any personal analysis work, coaching messages corresponding to their current activities through a mobile phone that they always carry with them.

The purpose of the invention is to resolve the problems of the prior art by proposing, in particular, a coaching application for a user of a mobile terminal capable of computing data of said mobile terminal in order to generate coaching messages.

For that purpose and according to a first aspect, the invention proposes a coaching application for a user of a mobile terminal, said application comprising computing means to establish computed data by analysing at least utilisation data of said mobile terminal, said application further comprising generating means of a coaching message with such computed data.

According to a second aspect, the invention relates to a mobile network architecture comprising a mobile terminal and a service provider communicating through the network, wherein at least utilisation data of the mobile terminal are communicated from the mobile terminal to the service provider, said service provider integrating a coaching application for the user of the mobile terminal, the application comprising computing means to establish computed data by analysing at least utilisation data, said application further comprising generating means of a coaching message with such computed data, said message being sent to the mobile terminal through the network.

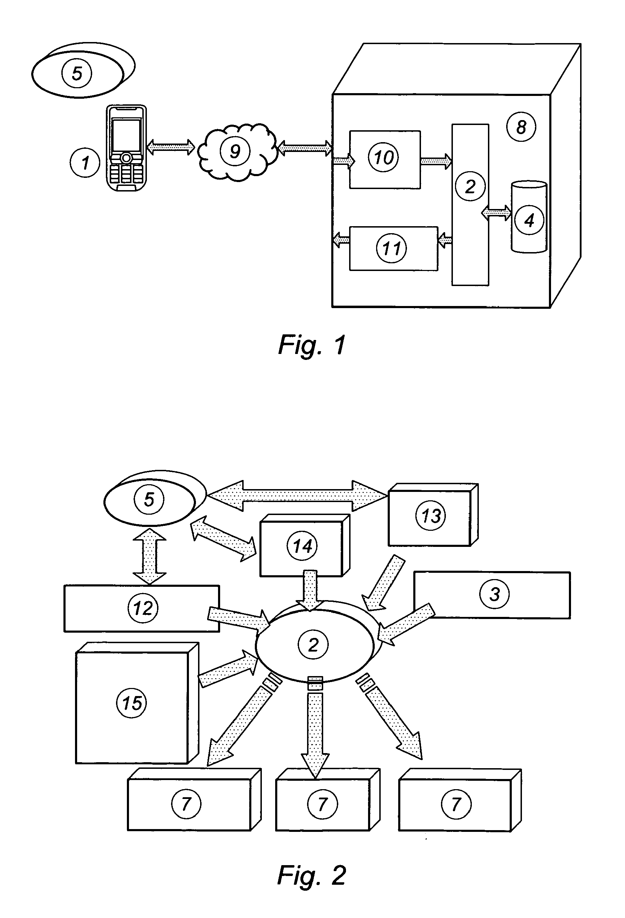

Other aspects and advantages of the invention will become apparent in the following description made with reference to the appended figures that represent the mobile network architecture (figure 1) and the coaching application (figure 2) used in such network architecture.

In relation with the figures, the mobile network architecture comprises a mobile terminal 1 and a service provider 8 communicating through the network 9.

The mobile terminal 1 is in particular a mobile phone comprising Internet connection means. Such a connection to the network 9 is made through GPRS (General Packet Radio Service) or Universal Mobile Telecommunication System (UMTS).

The Internet network and the service provider 8 have a permanent connection thanks to, for example, the Asymmetric Digital Subscriber Line (ADSL).

The connection between the mobile terminal 1 and the service provider 8 is implemented further to the user's subscription to the service provider 8 which is a service on demand delivered through the network 9.

Additionally, the mobile terminal 1 comprises geographical localisation means generating geographical localisation data 5 of the user. The geographical localisation means are typically a Global Positioning System (GPS).

The service provider 8 also integrates a coaching application 2 for the user of the mobile terminal 1. The coaching application 2 comprises computing means to establish computed data by analysing at least utilisation data 3 of the mobile terminal 1.

To that end, the service provider 8 comprises a data request module 10 collecting data from the mobile terminal 1, such collected data being sent to the computing means.

Different type of data can be analysed by the computing means. Figure 2 shows the different type of data as block with arrows representing the possible interactions between the data.

Indeed, the mobile terminal 1 comprises databases enabling to save different data, notably utilisation data 3. The utilisation data 3 concerns messages exchanged by using the mobile terminal, i.e. notably the list of photos taken, of music listened, of videos taken and seen, and of network services used by means of the mobile terminal 1.

The coaching application 2 further communicates with at least one database comprising user's personal data. Indeed, the computing means can further analyse the user's personal data to establish computed data, said user's personal data being obtained from at least one amongst the mobile terminal agenda 13, the mobile terminal directory 14, an additional database completed by the user with other personal data 15.

The other personal data 15 integrated by the user in the additional database can be related to his preferences for hobbies (science, psychology, religion,...), his professional activities (profession, technological domain,...) and/or other personal data such as weight, height, mood,...

The computing means of the application further communicate with at least one database comprising public data 4, said computing means being able to analyse further those data.

The public data 4 can comprise general address and/or information received through a network, i.e. the public phone and address book and/or news and publicity.

Additionally, the geographical localisation data 5 are available from the mobile terminal 1, the computing means further analysing such geographical localisation data 5 to establish computed data.

The computing means can also analyse a database 12 comprising the history of the geographical localisation data 5.

The computing means analyse those different data by computing them, i.e. each data is analysed independently and eventually together with other considered data in order for the generating means to obtain crossed data, i.e. computed data.

The generating means establish a coaching message 7 in which the computed data are presented or are transformed into an action to be communicated to the user.

Indeed, different types of coaching messages 7 can be established, according to the user's prior request.

Firstly, the computing means can be programmed to analyse specific data and/or analyse data during a given period of time, in order to establish dedicated computed data.

In the case of analysis of specific data, the user can choose to receive personal coaching to manage his relationships with his contacts, analyse the repartition of his activities and the evolution of the repartition.

For example, the user can wish to receive a coaching message 7 concerning sports. The computing means will analyse the other personal data 15 of the user (sports hobbies such as swimming) together with the geographical localisation data 5. When the user passes by a swimming pool, the computing means establish adequate computed data.

The application 2 further comprises generating means of a coaching message 7 with such computed data, said message being intended to be sent to the mobile terminal 1. In the case when the computed data are transformed into an action, the coaching message 7 will indicate that the user should go to the swimming-pool.

The computing means can also, for example, analyse the mobile terminal agenda 13 to include in the coaching message 7 the indication that the user has not been to the swimming-pool since a certain period of time or date.

The coaching application 2 can also remind the user of an event related to one of his contacts, such as a birthday or an exam date. The coaching application 2 will stop generating a coaching message 7 with such indication if the user calls his contact, or if the user goes to his contact's address (such an event being detected by the geographical localisation means) or if the user refuses the proposition comprised in the coaching message 7.

Furthermore, the computing means will analyse the public data 4 together with notably the geographical localisation data 5 and the user's other personal data 15. The coaching application 2 will generate a coaching message 7 comprising publicity related to the shop in which the user is currently, or related to shops in which he usually goes, or shops close to where he currently is, or shops which might be interesting for him as regards his personal data 15.

Further to the analysis by the computing means, the generating means can establish an error message in case of incoherence between at least two analysed data. Indeed, if the analysed geographical localisation data 5 indicates that the user is presently in a given place whereas, according to his mobile terminal agenda 13, he should be in another place, the generating means of a coaching message 7 will establish a message comprising an action message for the user to go the correct place.

The computed data can also be presented in the coaching message 7. In such case, the user will have chosen beforehand to receive a synthesis of his day, and that for a given period of time of that day.

The synthesis can consist in, for example, the list of the messages exchanged by using his mobile terminal, including the contents of said messages. The user can program the coaching application 2 in order to receive additional comments with the synthesis, corresponding to a relevant analysis of the computing means.

That synthesis can also be integrated in a coaching message 7 appearing as a graph representing the analysis made by the computing means 2.

The service provider 8 comprises a sending message module 11. Such a module receives the coaching message 7 from the generating means and sends said message to the mobile terminal 1 through the network 9.

The user can choose to receive either vocal or written coaching messages 7 on his mobile terminal 1.

When receiving a coaching message 7, the user has at any time the possibility to refuse the proposition comprised in said coaching message by indicating such refusal through his mobile terminal 1.

## Claims

1. Coaching application (2) for a user of a mobile terminal (1), said application comprising computing means to establish computed data by analysing at least utilisation data (3) of said mobile terminal (1), said application (2) further comprising generating means of a coaching message (7) with such computed data.

2. Coaching application (2) according to claim 1, wherein the utilisation data (3) concerns messages exchanged by using the mobile terminal (1).

3. Coaching application (2) according to claims 1 or 2, wherein the computing means further analyse the user's personal data to establish computed data, said user's personal data being obtained from at least one amongst the mobile terminal agenda (13), the mobile terminal directory (14), an additional database completed by the user with other personal data (15).

4. Coaching application (2) according to any of claims 1 to 3, wherein the computing means further analyse public data (4) to establish computed data, said public data (4) comprising general address and/or information received through a network (9).

5. Coaching application (2) according to any of claims 1 to 4, wherein geographical localisation data (5) are available from the mobile terminal (1), the computing means (2) further analyse such geographical localisation data (5) to establish computed data.

6. Coaching application (2) according to any of claims 1 to 5, wherein the generating means establish an error message in case of incoherence between at least two analysed data.

7. Coaching application (2) according to any of claims 1 to 6, wherein the computing means can be programmed to analyse specific data and/or to analyse data during a given period of time, in order to establish dedicated computed data.

8. Coaching application (2) according to any of claims 1 to 7, wherein the generating means establish a coaching message (7) in which the computed data are presented or are transformed into an action to be communicated to the user.

9. Mobile network architecture comprising a mobile terminal (1) and a service provider (8) communicating through the network (9), wherein at least utilisation data (3) of the mobile terminal (1) are communicated from the mobile terminal (1) to the service provider (8), said service provider (8) integrating a coaching application (2) for the user of the mobile terminal (1), the application (2) comprising computing means to establish computed data by analysing at least utilisation data (3), said application (2) further comprising generating means of a coaching message (7) with such computed data, said message being sent to the mobile terminal (1) through the network (9).

10. Mobile network architecture according to claim 9, wherein the coaching application (2) further communicates with at least one database comprising user's personal data and/or public data (4), said coaching application (2) being able to analyse further those data.

11. Mobile network architecture according to claims 9 or 10, wherein the mobile terminal (1) comprises geographical localisation means generating geographical localisation data (5) of the user, such data being communicated to the service provider (8) through the network (9) in order to be analysed by the computing means.
